# EUROPÄISCHE PATENTSCHRIFT

(11) **EP 2 385 267 B1**
(45) Veröffentlichungstag und Bekanntmachung des Hinweises auf die Patenterteilung: **28.11.2012**
(21) Anmeldenummer: 11164517.2
(22) Anmeldetag: 03.05.2011
(51) Int. Cl.: F16D 55/2265, F16D 55/227

(54) **Scheibenbremse für ein Nutzfahrzeug**
Disc brake for a commercial vehicle
Frein à disque pour un véhicule utilitaire

(30) Priorität: 05.05.2010 DE 102010019469
(43) Veröffentlichungstag der Anmeldung: 09.11.2011
(73) Patentinhaber: KNORR-BREMSE Systeme für Nutzfahrzeuge GmbH, 80809 München (DE)
(72) Erfinder: Beck, Thomas, 94034, Passau (DE); Gruber, Markus, 85560, Ebersberg (DE)
(74) Vertreter: Mattusch, Gundula

(56) Entgegenhaltungen:
- WO-A1-2005/071280
- DE-A1- 10 243 128
- DE-A1- 10 245 027
- US-A1- 2010 044 169

## Beschreibung

Die Erfindung betrifft eine Scheibenbremse für ein Nutzfahrzeug nach dem Oberbegriff des Anspruchs 1.

Bei derartigen Scheibenbremsen wird der Bremssattel durch als Axial-Gleitlager ausgebildete Befestigungselemente mit dem Bremsträger, der ortsfest am Fahrzeug gehalten ist, verbunden. Dabei greifen Führungsholme in den Bremsträger ein, die in Gleitbuchsen des Bremssattels so geführt sind, dass eine axiale Verschiebung des Bremssattels gegenüber dem ortsfesten Bremsträger möglich ist.

Aus der DE 102 43 128 A1 ist eine gattungsgemäße Scheibenbremse bekannt, bei der ein Axial-Gleitlager als Festlager mit geringem Gleitspiel ausgebildet ist, während das andere Axial-Gleitlager als Loslager fungiert, wodurch insbesondere Fertigungstoleranzen ausgeglichen werden.

Um eine ausreichende Standzeit zu erreichen, die die volle Funktionsfähigkeit der Gleitbuchsen mit einschließt, ist eine Abdichtung der Gleitbuchsen gegenüber äußeren Einflüssen erforderlich, so dass verhindert wird, dass Schmutz und/oder Feuchtigkeit in das Axial-Gleitlager eindringen können.

Hierzu sind die Axial-Gleitlager auf der der Bremsscheibe abgewandten Seite jeweils durch einen topfartigen, aus Blech geformten Deckel verschlossen, der durch eine Presspassung in einer Lagerbohrung des Bremssattels gehalten wird. Neben der Funktion des Haltens dient die Presspassung auch der Abdichtung des Deckels.

Allerdings ergeben sich bei der bekannten Konstruktion Probleme hinsichtlich der radial wirkenden Presskräfte der Deckelwandung auf die Laibung der Lagerbohrung, die ausgehend von einer eine üblicherweise vorgesehene Fase der Lagerbohrung begrenzenden Kante hin zur Öffnung des Deckels abnehmen.

Die an der Kante wirksame Presskraft weist neben einer radialen auch eine axiale Komponente auf, die insbesondere durch die versteifende Wirkung des Deckelbodens verursacht wird.

Wie sich gezeigt hat, tritt die größte Flächenpressung im Bereich von 0 bis 2 mm unterhalb der Fasenkante auf, mit, wie erwähnt, abnehmender Tendenz.

Damit ist eine dauerhaft ausreichende Abdichtung durch den Deckel nicht gewährleistet, was zu einer Korrosion der Axial-Gleitlager führen kann, mit der Folge, dass sich nach einer Betätigung der Bremse der Bremssattel nicht wieder in seine Ausgangslage zurückbewegt und ein Bremsbelag weiterhin an der Bremsscheibe anliegt. Die dadurch bedingte thermische Belastung im Fahrbetrieb kann zu einem schleichenden Ausfall der Scheibenbremse führen.

Der Erfindung liegt die Aufgabe zugrunde, eine Scheibenbremse der gattungsgemäßen Art so weiterzuentwickeln, dass mit geringem konstruktiven und fertigungstechnischen Aufwand ihre Betriebssicherheit verbessert wird.

Diese Aufgabe wird durch eine Scheibenbremse mit den Merkmalen des Anspruchs 1 gelöst.

Wie sich überraschend gezeigt hat, wird durch diese konstruktive Ausbildung eine gleichmäßige und größtmögliche Flächenpressung bis hin zur dem Axial-Gleitlager zugewandten Öffnung des Deckels erreicht, wobei die zum Stand der Technik beschriebenen Axialkräfte im Randbereich der Fase nicht mehr auftreten.

Damit wird zuverlässig verhindert, dass sich der Deckel in seiner Halterung bewegt oder gar daraus löst. Selbst bei während eines Zuspannvorgangs auftretenden Verformungen des Bremssattels verbleibt der Deckel dauerhaft in seiner Position. Somit können während der gesamten Betriebsdauer keine Verschmutzungen oder Feuchtigkeit in das Innere des Axial-Gleitlagers gelangen. Hierdurch wird naturgemäß die Betriebssicherheit gegenüber einer Scheibenbremse nach dem Stand der Technik wesentlich verbessert, zumal die sich aus der Verschmutzung bzw. Korrosion ergebenden Nachteile nicht mehr auftreten.

Die erfindungsgemäße Maßnahme, die Wandung des Deckels in einem dessen Boden zugewandten Teilbereich gegenüber der parallel zur Wandung verlaufenden Laibung der Lagerbohrung frei zu lassen, also in dem Teilbereich, der sich an die Fase anschließt, kann auf unterschiedliche Art und Weise realisiert werden.

Nach einer Weiterbildung der Erfindung ist vorgesehen, den frei liegenden Teilbereich durch eine Abstufung der Wandung herzustellen, bei gleichbleibender Wanddicke.

Da der Deckel als Blech-Tiefziehteil hergestellt ist, ist diese Ausführungsvariante besonders einfach und kostengünstig herstellbar.

Dies trifft gleichermaßen auf eine weitere Ausführungsform zu, bei der die Wanddicke in dem frei liegenden Teilbereich gegenüber der im anliegenden Bereich der Wandung des Deckels verringert ist. Die versteifende Wirkung des Deckelbodens wird somit gemindert, was ebenfalls zu einer gleichmäßigeren Verteilung der Presskräfte beiträgt.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine Scheibenbremse in einer schematischen Draufsicht
- Figuren 2 und 3: jeweils einen Teilausschnitt der Scheibenbremse in einer geschnittenen Seitenansicht.

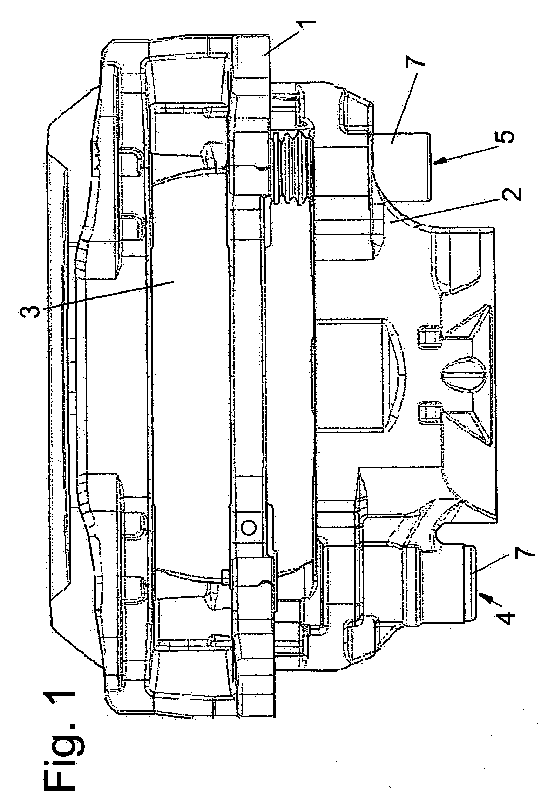

In der Figur 1 ist eine Scheibenbremse für ein Nutzfahrzeug dargestellt, die in ihrem Grundaufbau einen Bremssattel 2 aufweist, der eine Bremsscheibe 3 umfasst, die an einer nicht dargestellten Achse des Nutzfahrzeuges befestigt ist. Der Bremssattel 2 ist an einem Bremsträger 1 des Nutzfahrzeuges, bezogen auf die Bremsscheibe 3, axial verschiebbar gelagert.

Hierzu sind zwei als Axial-Gleitlager ausgebildete Befestigungselemente vorgesehen, von denen das linke als Festlager 4 und das rechte als Loslager 5 zum Ausgleich fertigungsbedingter Toleranzen fungiert.

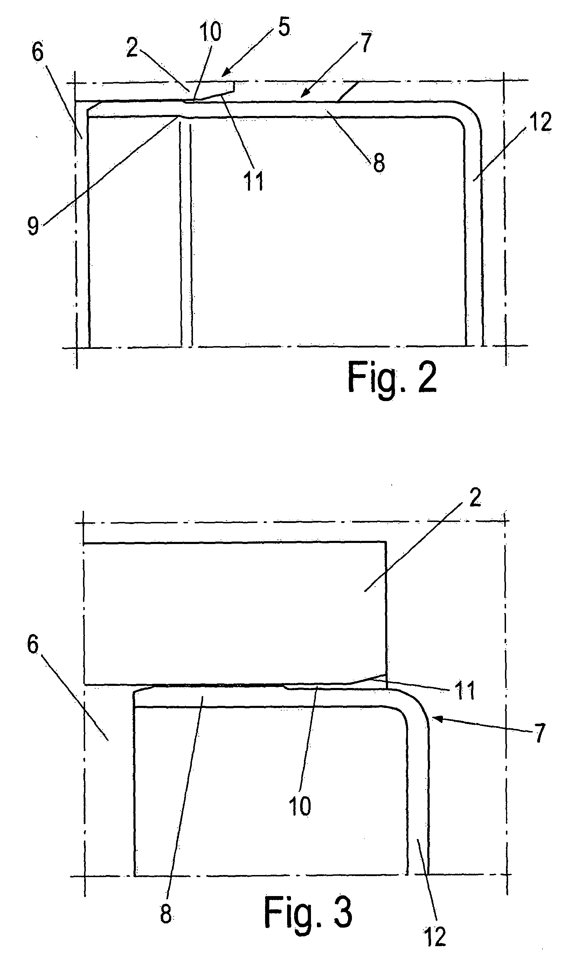

Auf der der Bremsscheibe 3 abgewandten Seite ist jedes Befestigungselement durch einen reibschlüssig in einer Lagerbohrung 6 (Figuren 2 und 3) des Bremssattels 2 gehaltenen Deckel 7 verschlossen.

Als Einzelheit ist dies in den Figuren 2 und 3 dargestellt, wobei die Figur 2 den Verschluss des Loslagers 5 und die Figur 3 den Verschluss des Festlagers 4 zeigen.

Dabei weist der Deckel 7 eine zylindrische Wandung 8 sowie einen Deckelboden 12 auf.

Erfindungsgemäß liegt die Wandung des Deckels 7 in einem dem Boden zugewandten Teilbereich 10 gegenüber der parallel zur Wandung 8 verlaufenden Laibung der Lagerbohrung 6 frei.

Bei dem in der Figur 2 gezeigten Beispiel wird der Teilbereich 10 gebildet durch eine Abstufung 9 der Wandung 8, wobei der Teilbereich 10 im Anschluss an die Fase 11 gebildet ist.

In der Figur 3 wird der Teilbereich 10 durch eine Verringerung der Dicke der Wandung 8 gebildet, die sich ausgehend von dem Bereich, der an der Laibung der Lagerbohrung 6 anliegt, bis in den Übergangsbereich zum Deckelboden 12 erstreckt. Durch die Wandverschwächung wird gleichzeitig eine versteifende Wirkung des Deckelbodens 12 gemindert, was zu einer gleichmäßigeren Verteilung der Flächenpressung beiträgt, mit der der Reibschluss zwischen dem Deckel 7 und der Lagerbohrung 6 hergestellt wird.

Die beiden gezeigten Ausführungsvarianten des Deckels 7 sind jeweils wahlweise für das Festlager 4 und/oder das Loslager 5 einsetzbar.

## Patentansprüche

1. Scheibenbremse für ein Nutzfahrzeug, mit einem eine Bremsscheibe (3) umfassenden Bremssattel (2), der mittels als Axial-Gleitlager ausgebildeter Befestigungselemente, bezogen auf die Bremsscheibe (3) axial verschiebbar an einem ortsfesten Bremsträger (1) befestigt ist, wobei jedes Befestigungselement auf seiner der Bremsscheibe (3) abgewandten Seite durch einen reibschlüssig in einer Lagerbohrung (6) des Bremssattels (2) gehaltenen, topfartigen Deckel (7) verschlossen ist, **dadurch gekennzeichnet, dass** die Wandung (8) des Deckels (7) in einem dessen Boden (12) zugewandten Teilbereich (10) gegenüber der parallel zur Wandung (8) verlaufenden Laibung der Lagerbohrung (6) frei liegt.

2. Scheibenbremse nach Anspruch 1, **dadurch gekennzeichnet, dass** sich der frei liegende Teilbereich (10) an eine die Lagerbohrung (6) öffnungsseitig begrenzende Fase (11) anschließt.

3. Scheibenbremse nach Anspruch 1 oder 2, **dadurch gekennzeichnet, dass** der Teilbereich (10) durch eine umfängliche Abstufung (9) der Wandung (8) gebildet ist.

4. Scheibenbremse nach einem der vorhergehenden Ansprüche, **dadurch gekennzeichnet, dass** der Teilbereich (10) durch eine Verringerung der Dicke der Wandung (8) gebildet ist.

5. Scheibenbremse nach einem der vorhergehenden Ansprüche, **dadurch gekennzeichnet, dass** die dünnere Wandung (8) sich bis in den Übergang zum Boden (12) erstreckt.

6. Scheibenbremse nach einem der vorhergehenden Ansprüche, **dadurch gekennzeichnet, dass** der Boden (12) in seiner Dicke der Dicke der dickeren Wandung (8) entspricht.

## Claims

1. Disc brake for a commercial vehicle, comprising a brake calliper (2) encompassing a brake disc (3), which calliper (2) is secured to a fixed adapter (1) by means of fastening elements designed as plain thrust bearings while being capable of axial movement with respect to the brake disc (3), wherein each fastening element is, on the side remote from the brake disc (3), closed by a pot-like cap (7) held frictionally in a bearing bore (6) of the brake calliper (2), **characterised in that** the wall (8) of the cap (7) is, in a sub-region (10) facing its base (12), exposed with respect to the reveal of the bearing bore (6), which reveal extends parallel to the wall (8).

2. Disc Brake according to claim 1, **characterised in that** the exposed sub-region (10) adjoins a chamfer (11) which bounds the bearing bore (6) on the opening side.

3. Disc Brake according to claim 1 or 2, **characterised in that** the sub-region (10) is represented by a circumferential stepping (9) of the wall (8).

4. Disc brake according to any of the preceding claims, **characterised in that** the sub-region (10) is represented by a reduced thickness of the wall (8).

5. Disc brake according to any of the preceding claims, **characterised in that** the thinner wall (8) extends into the transition to the base (12).

6. Disc brake according to any of the preceding claims, **characterised in that** the thickness of the base (12) corresponds to the thickness of the thicker wall (8).

## Revendications

1. Frein à disque pour un véhicule utilitaire, comprenant un étrier (2) de frein qui entoure un disque (3) de frein et qui, au moyen d'un élément de fixation constitué en palier lisse axial, est fixé à un support (1) de frein fixe de manière à pouvoir coulisser axialement par rapport au disque (3) de frein, chaque élément de fixation étant fermé sur son côté éloigné du disque (3) de frein par un couvercle (7) en forme de pot, maintenu à frottement dans un trou (6) de palier de l'étrier (2) de frein, **caractérisé en ce que** la paroi (8) du couvercle (7) est, dans une zone (10) partielle tournée vers son fond (12), libre par rapport à l'ébrasement, s'étendant parallèlement à la paroi (8), du trou (6) de palier.

2. Frein à disque suivant la revendication 1, **caractérisé en ce que** la zone (10) partielle libre se raccorde à un biseau (11) délimitant le trou (6) de palier du côté de l'ouverture.

3. Frein à disque suivant la revendication 1 ou 2, **caractérisé en ce que** la zone (10) partielle est formée par un épaulement (9) périphérique de la paroi (8).

4. Frein à disque suivant l'une des revendications précédentes, **caractérisé en ce que** la zone (10) partielle est formée par une diminution de l'épaisseur de la paroi (8).

5. Frein à disque suivant l'une des revendications précédentes, **caractérisé en ce que** la paroi (8) plus mince s'étend jusqu'à la transition au fond (12).

6. Frein à disque suivant l'une des revendications précédentes, **caractérisé en ce que** l'épaisseur du fond (12) correspond à l'épaisseur de la paroi (8) la plus épaisse.
